# EUROPÄISCHE PATENTSCHRIFT

(11) **EP 2 438 313 B1**
(45) Veröffentlichungstag und Bekanntmachung des Hinweises auf die Patenterteilung: **03.04.2013**
(21) Anmeldenummer: 10737821.8
(22) Anmeldetag: 12.07.2010
(51) Int. Cl.: F16B 2/14, F16B 12/46, F16B 12/50

(54) **VERBINDUNGSSYSTEM**
JOINING SYSTEM
SYSTÈME D'ASSEMBLAGE

(30) Priorität: 21.07.2009 DE 102009034038; 21.05.2010 DE 202010005475 U
(43) Veröffentlichungstag der Anmeldung: 11.04.2012
(73) Patentinhaber: Flicker, Hartmut, 33605 Bielefeld (DE)
(72) Erfinder: Flicker, Hartmut, 33605 Bielefeld (DE)
(74) Vertreter: Tetzner, Michael
(86) Internationale Anmeldenummer: PCT/EP2010/059992
(87) Internationale Veröffentlichungsnummer: WO 2011/009750

(56) Entgegenhaltungen:
- WO-A1-2007/003016
- US-A- 4 493 583

## Beschreibung

Aus dem allgemeinen Stand der Technik ist bekannt, dass das Eindrücken kegel- oder keilförmige Körper in entsprechend formähnliche Hohlräume eine rechtwinkelig zur Einschubrichtung ausgerichtete Presskraft erzeugt, die als Keilkraft bezeichnet wird und bei entsprechender Abstimmung von Oberflächenrauhigkeiten und Keilwinkeln eine feste Verbindung ergibt, zu deren Lösung wiederum eine bestimmte Kraft notwendig ist. Zudem sind Systeme bekannt, die diese Wirkungswiese mit einer axialen Fixierung in Einschubrichtung kombinieren und somit eine Verbindung darstellen, die selbst durch das Aufbringen einer für die Keilklemmung ausreichenden Lösekraft nicht gelöst werden können.

Des weiteren ist aus der DE 42 36 919 ein Verbindungsbeschlag bekannt, der zwei Bauteile, die an einer Fuge aneinander stoßen miteinander verbinden kann. In der DE 42 36 919 wird hierzu ein Zwillingsdübel aus zwei parallel ausgerichteten Dübeln beschrieben, die miteinander verbunden sind, und die jeweils formschlüssig in eines der beiden zu verbindenden Bauteile greifen. In den darstellenden Figuren der DE 42 36 919 wird dieser Beschlag in erster Linie zum Verbinden von zwei spitz auf Gehrung aneinander stoßenden Bauteilen verwendet.

Darüber hinaus sind aus dem Stand der Technik und insbesondere aus der DE 25 25 791 Verbindungsmittel bekannt, die eine Eckverbindung aus drei nicht parallelen und in speziellen Fällen rechtwinkelig zueinander stehenden stabförmigen Rahmenteilen ermöglicht. Allerdings sind die bekannten Verbindungsmittel im verbauten Zustand zumindest teilweise sichtbar, oft ist der Zusammenbau aufwendig. Insbesondere die Verbindung von drei aufeinander treffenden stabförmigen Rahmenteilen, deren Fügeflächen zueinander alle auf Gehrung geschnitten sind, ist mit derartigen Verbindungsmitteln nicht möglich und wird zumeist mit fest verklebten Verbindungselementen realisiert.

Die DE 696 06 079 T2 beschreibt ein zweischenkliges Verbindungselement zum Verbinden zweier auf Gehrung geschnittener Bauteile, wobei beide Bauteile in der Fügefläche Ausnehmungen aufweisen und ein Schenkel des Verbindungselementes in der einen Ausnehmung und der andere Schenkel in der anderen Ausnehmung aufgenommen wird.

Ein dreiteiliges Verbindungssystem ist weiterhin in der DE 102 29 300 B3 dargestellt und besteht aus einem verzahnten Dübel, einem Spreizkörper und einer Buchse, wobei der Spreizkörper über die Buchse in einem ersten Bauteil verankert wird und der Dübel in einer Ausnehmung eines zweiten Bauteils durch den Spreizkörper spreizbar ist.

Aus der WO 2007/003016 A1 ist ein Verbindungssystem für zwei Bauteile gemäß dem Oberbegriff des Anspruches 1 bekannt. Weiterhin wird in der US 4 493 583 A ein einteiliges Verbindungselement mit zwei rechtwinklig zueinander ausgerichteten Schenkeln offenbart.

Der Erfindung liegt die Aufgabe zugrunde, ein einfaches Verbindungssystem mit wenigstens zwei miteinander zu verbindenden Bauteilen und einer Verbindungseinheit anzugeben.

Diese Aufgabe wird erfindungsgemäß durch die Merkmale des Anspruchs 1 gelöst.

Die Kontaktflächen, an denen die beiden Teile aufeinander treffen, stehen bezüglich der Schubrichtung in einem flachen Winkel zwischen 0° und 5°, sodass beim Ineinanderschieben Presskräfte rechtwinkelig zur Schubbewegung entstehen.

Diese Presskräfte führen zwischen den beiden Teilen der Verbindungseinheit zu einer selbsthemmenden Verklemmung, zu deren Lösung eine Lösekraft entgegen der Einschubrichtung aufgebracht werden muss. Darüber hinaus sind die Teile der Verbindungseinheit in Ihrer Elastizität so abgestimmt, dass sie die Presskräfte nach außen auf die zu verbindenden Bauteile übertragen. Die Verbindungseinheit sitzt passgenau in Ausnehmungen (31,41,51), die in den zu verbindenden Bauteilen entsprechend der zweischenkeligen Form der Verbindungseinheit eingebracht sind. Die Ausnehmungen in den Bauteilen und die Fügeflächen der Bauteile zueinander sind dabei so angelegt, dass jedes der zu verbindenden Bauteile genügend Kontaktfläche zu den Außenflächen der Verbindungseinheit hat, damit über die dort übertragenen Presskräfte eine Reibschlüssige Verbindung der Bauteile gewährleistet ist. Hierbei ist die Gestalt des zweischenkeligen Aufbaus, wobei die räumlichen Abmaße in Schubrichtung und entlang der Schenkelachsen annähernd gleich sind, besonders vorteilhaft für die Verbindung von drei zueinander rechtwinkelig stehenden stabförmigen Bauteilen (3,4,5), deren Fügeflächen zueinander alle in einem 45° Winkel zueinander auf Gehrung stehen. In dieser Konstellation ergeben sich für alle drei Bauteile annähernd gleich große Kontaktflächen zu der Verbindungseinheit, über welche die rechtwinkelig zur Einschubrichtung der Verbindungseinheit erzeugten Presskräfte übertragen werden.

Die Verbindungsmittel sind nach dem Zusammenbau der Bauteile von außen nicht mehr sichtbar.

Um die Verbindungskräfte sowohl zwischen den einzelnen Teilen der Verbindungseinheit, als auch zwischen den zu verbindenden Bauteilen zu erhöhen, ist es zweckmäßig, zusätzlich zu dem durch die Presskräfte gewährleisten Reibschluss weitere formschlüssige Verbindungen vorzusehen. Hierzu ist an dem inneren Teil (2) eine Blattfeder (24) vorgesehen, deren Ende sich rechtwinkelig zur Einschubrichtung (5z) der Verbindungseinheit federnd bewegt. Auf diesem federnden Ende befindet sich eine Rastnase (25), die wiederum eine Sperrfläche (251) aufweist, die gegenüber der Einschubrichtung annähernd rechtwinkelig ausgerichtet ist. Das nach dem Ineinanderschieben äußere Teil (1) der Verbindungseinheit weist in dem Bereich, wo es mit der Raststelle des inneren Teils in Verbindung steht, eine Ausnehmung (15) auf, die ebenfalls eine Sperrfläche (151) aufweist, die gegenüber der Einschubrichtung (5z) der Verbindungseinheit in einem annähernd rechtwinkeligen Winkel steht. Wird nun das eine Teil der Verbindungseinheit in die dafür formähnlich ausgebildete Ausnehmung des anderen Teils hineingeschoben, wird die Blattfeder (24) beim Einschieben rechtwinkelig zur Einschubrichtung ausgelenkt, wodurch das außen liegende Teil (1) der Verbindungseinheit weiter vordringen kann.

Sobald die im außen liegenden Teil (1) vorhandene Ausnehmung (15) genau über der Blattfeder (24) und deren Rastnase (25) steht, schwingt die Blattfeder (24) in ihre Ausgangslage zurück, bei der die Rastnase (25) an der Blattfeder (24) in dem äußeren Teil (1) der Verbindungseinheit steht und mit seiner Sperrfläche (251) genau auf der Sperrfläche (151) in der Ausnehmung (15) des äußeren Teils (1) steht. Hierdurch ist eine Bewegung der beiden Teile (1,2) der Verbindungseinheit entgegen der Einschubrichtung ausgeschlossen. Um eine Demontierbarkeit dieser formschlüssig gesicherten Verbindung zu erhalten, ist es sinnvoll, in den Teilen der Verbindungseinheit und in den umschließenden Bauteilen Zugänge (43) vorzusehen, die es erlauben, mit einem stiftartigen Werkzeug auf die Blattfeder (24) zu drücken und damit die Rastnase(25) außer Eingriff zu bringen. Insbesondere im Fall einer Verbindung von drei rechtwinkelig aufeinander treffenden stabförmigen Bauteilen (3,4,5) ist es zweckmäßig, diesen Zugang (43) von der Innseite, der durch die drei Schenkel gebildeten räumlichen Ecke vorzusehen.

Zur Unterstützung der Pressverbindung zwischen der Verbindungseinheit und den zu verbindenden Bauteilen ist es weiterhin zweckmäßig, zwischen einzelnen Teilen zusätzliche Verbindungsmittel einzusetzen. Hierzu können in den Teilen der Verbindungseinheit Bohrungen vorgesehen sein, durch die hindurch eine Verschraubung zu jeweils einem der zu verbindenden Bauteile ausgeführt werden kann. Weiterhin ist es denkbar an die Teile der Verbindungseinheit geeignete Geometrien (27) an zu formen, die einzelne Verklebungen zwischen einem Teil der Verbindungseinheit und einem oder mehreren der zu verbindenden Bauteile unterstützen. Diese Geometrien können vorzugsweise zylindrische Dübel oder planare Klebflächen (271) sein, die zusätzlich unterstützende Verzahnungen (272) in der Kontaktfläche aufweisen.

Mit einer solchen wie zu vor beschriebenen Verbindungseinheit ist es nun möglich, eine einfache Steckverbindung für vorzugsweise drei aufeinander rechtwinkelig stehende stabförmige Bauteile (3,4,5) herzustellen. Diese kann je nach Festigkeitsbedarf nur durch die aus der Pressverbindung resultierenden Reibkräften gehalten, oder durch die ergänzende formschlüssige Verrastung und den Einssatz bekannter Verbindungsmittel gesichert werden. Hierbei sorgt die besondere mehrschenkelige Ausgestaltung der Keilgeometrie nach Anspruch 1 für eine geeignete Verteilung der Presskraft auf die zu verbindenden Bauteile. Die Merkmale in den weiteren Ansprüchen ermöglichen zusätzliche formschlüssige Sicherung der Steckverbindung bei Erhalt der Demontierbarkeit.

Anstatt der zwei stabförmigen Bauteile, die sich in der Ebene rechtwinkelig zur Schubrichtung erstrecken, kann auch eine Platte (6) eingesetzt werden, die in dieser Ebene liegt und an ihren Ecken Ausnehmungen (61,62) aufweist, die denen (31,41) der zwei stabförmigen und auf Gehrung zueinander stehenden Bauteile (3,4) entspricht. Dieses Ausführungsbeispiel stellt eine für den Möbelbau besonders rationelle Variante dar, die aber von außen betrachtet von der klassischen Rahmenbauweise mit den 3 in jeder Ecke aufeinander treffenden stabförmigen Bauteilen (3,4,5) kaum zu unterscheiden ist.

Weiterhin kann der Winkel zwischen den Bauteilachsen 3y und 4x auch von den dargestellten 90° abweichen. Hierzu kann eine Variante der Verbindungseinheit eingesetzt werden, in welcher der Winkel zwischen den beiden Schenkeln (11,12) im Teil 1 und den Schenkeln (21,22) im Teil 2 dem von 90° abweichenden Winkel von z.B. 120° entspricht.

Die folgenden Figuren zeigen die Verbindungseinheit in drei bevorzugten Ausführungen.
- Fig. 1: Räumliche Darstellung des Verbindungssystems mit einer zweiteiligen und zweischenkeligen Verbindungseinheit mit rechtwinkeligen Schenkeln zur Verbindung von drei zueinander rechtwinkelig stehenden stabförmigen Bauteilen, deren Fügeflächen alle zueinander auf Gehrung ausgerichtet sind und mit einer zusätzlichen formschlüssigen Sicherung in Form einer auf einer Blattfeder angeformten Rastnase ausgestattet sind.
- Fig. 2: Räumliche Darstellung eines Verbindungssystems mit einer Verbindungseinheit wie in Figur 1, bei der anstelle von zwei koplanaren stabförmigen Bauteilen eine Platte zum Einsatz kommt.
- Fig. 3a: Ansicht der Verbindungseinheit von oben mit Schnittführung gemäß der Darstellung in Fig.3b.
- Fig. 3b: Vertikalschnitt der Verbindungseinheit.

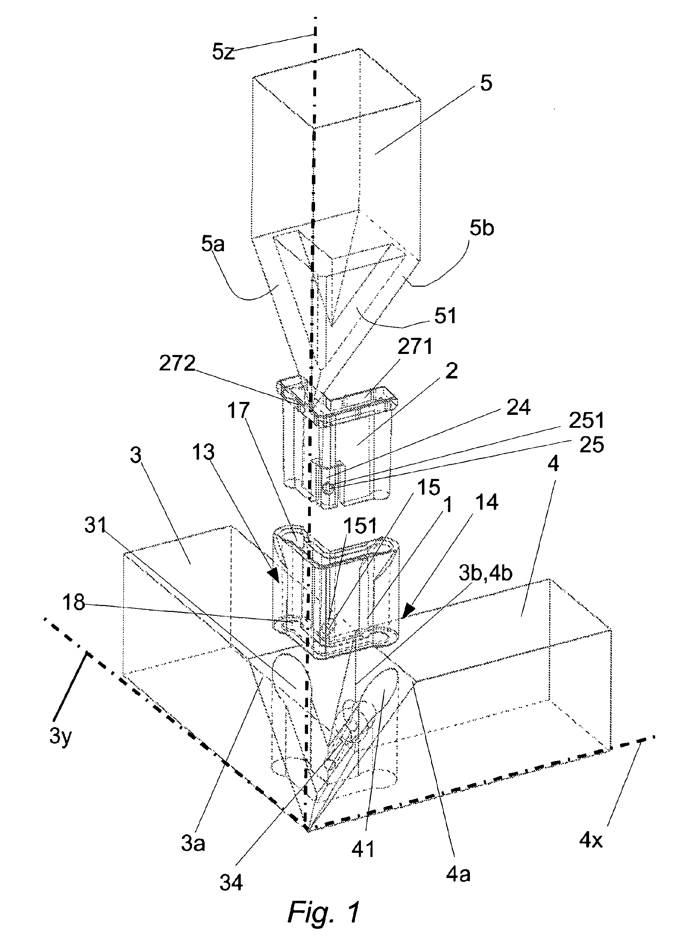

Fig.1 zeigt die Verbindungseinheit in einer räumlichen Explosionsdarstellung mit seinem nach dem Inneinanderschieben äußeren Teil 1, seinem nach dem Inneinanderschieben inneren Teil 2 und den drei zu verbindenden stabförmigen Bauteilen 3,4 und 5. Die Bauteile 3,4 und 5 weisen an ihren zu verbindenden Enden Fügeflächen 3a, 3b, 4a, 4b, 5a und 5b auf, die derart zueinander ausgerichtet sind, dass die drei Bauteile nach dem Zusammenfügen an diesen Flächen in Ihren Stabachsen alle zueinander rechtwinkelig stehen. Die Bauteile 3 und 4 sind in dieser Darstellung bereits an ihren Fügeflächen 3a und 4a aneinander gefügt bilden einen Winkel von 90°.

In allen drei Bauteilen sind im Bereich der Fügeflächen Ausnehmungen 31, 41, 51 eingebracht, die in ihrer Geometrie auf die aufzunehmende Verbindungseinheit abgestimmt sind.
Es ist erkennbar, dass die Profilierungen 13 und 14 des äußeren Teils 1 der Verbindungseinheit nach dem Ineinanderschieben aller Bauteile in Richtung der Achse 5z ein Auseinanderbewegen der Teile 3 und 4 in Richtungen der Ebene aus 3y und 4x formschlüssig verhindern. Beim Ineinanderschieben aller Teile in Richtung 5z wird der innere Teil 1 der Verbindungseinheit fast vollständig in den äußeren Teil 2 der Verbindungseinheit hineingeschoben. Der Hohlraum 17 mit all seinen Teilflächen ist formähnlich auf die Außengeometrie des Teils 2 abgestimmt, wobei die aufeinander treffenden Flächen des Hohlraums 17 und des Teils 2 zur Einschubrichtung 5z in einem Winkel von 0°-5° stehen, der so bemessen ist, dass in Abhängigkeit der jeweiligen Materialpaarungen zwischen den Teilen 1 und 2 eine Keilpressung rechtwinkelig zur Achse 5z entsteht. Diese Presskräfte werden durch den Teil 1 der Verbindungseinheit über all seine Außenflächen auf die parallel zur Achse 5z stehenden Flächen in den Ausnehmungen 31,41 und 51 der zu verbindenden Bauteile übertragen. Die besonders vorteilhafte zweischenkelige Dimensionierung der Verbindungseinheit, bei der die Schenkellänge in Richtung 4x und 3y annähernd so groß ist, wie die Profillänge in Richtung 5z, gewährleistet eine gleichmäßige Verteilung des Pressdrucks auf die zu verbindenden Bauteile. Nach dem Ineinanderschieben sind somit alle Bauteile miteinander verpresst und werden so durch die Verbindungseinheit zusammen gehalten.

In dieser Figur 1 sind zusätzlich die Positionierungen der Rastfeder 24 im Teil 2, die Ausnehmung 15 im äußeren Teil 1 und die Durchgangsöffnung 34 in den Bauteilen 3 und 4 erkennbar. Sie stellen im Zusammenspiel eine formschlüssige Sicherung der Verbindung dar, die über den Zugang durch die Durchgangsöffnung 34 wieder gelöst werden kann.

Weiterhin sind in dieser Abbildung am inneren Teil 2 der Verbindungseinheit Geometrien 25 erkennbar, welche die Verklebung von dem inneren Teil 2 mit Bauteil 5 unterstützen können, sowie Bohrungen 18 am äußeren Teil 1, die z.B. eine Verschraubung mit den Bauteilen 3 und 4 ermöglichen können.

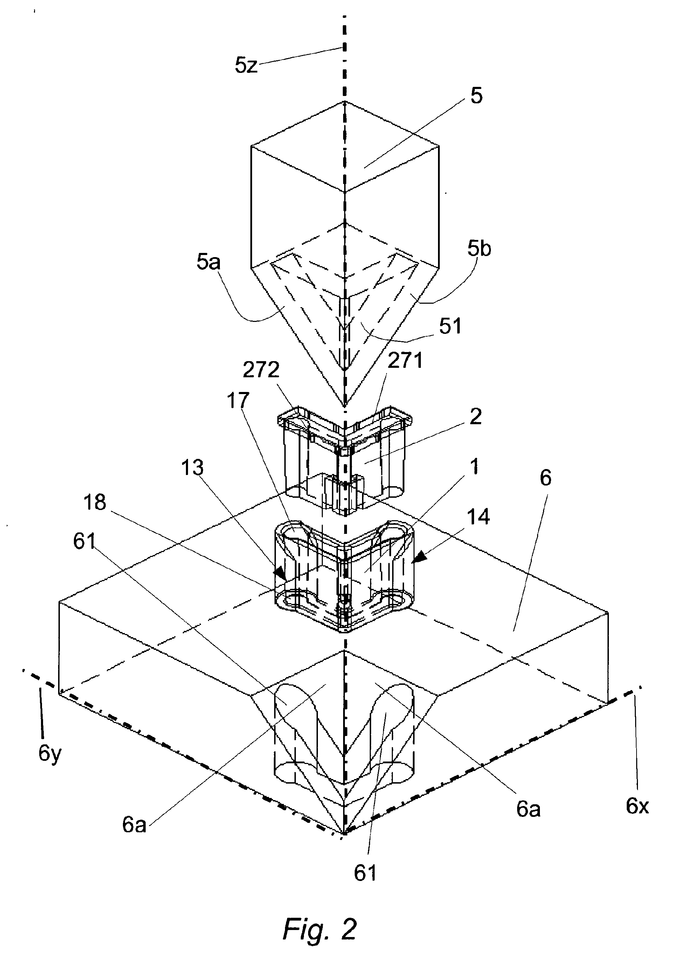

Fig. 2 zeigt ebenfalls die Verbindungseinheit in einer räumlichen Explosionsdarstellung, allerdings kommt anstelle der stabförmigen Bauteile 3, 4 ein plattenförmiges Bauteil 6 zum Einsatz. Dieses Bauteil weist entsprechend der Geometrie der Bauteile 3 und 4 mit ihren Fügeflächen 3a und 4a sowie den Ausnehmungen 31 und 41 seinerseits Fügeflächen 6a und 6b sowie eine Ausnehmung 61 auf. Hierdurch lässt sich das Bauteil 5 ebenso mit der Verbindungseinheit, bestehend aus Teil 1 und Teil 2, und dem plattenförmigen Bauteil 6 verbinden, wie zuvor mit den Bauteilen 3 und 4.

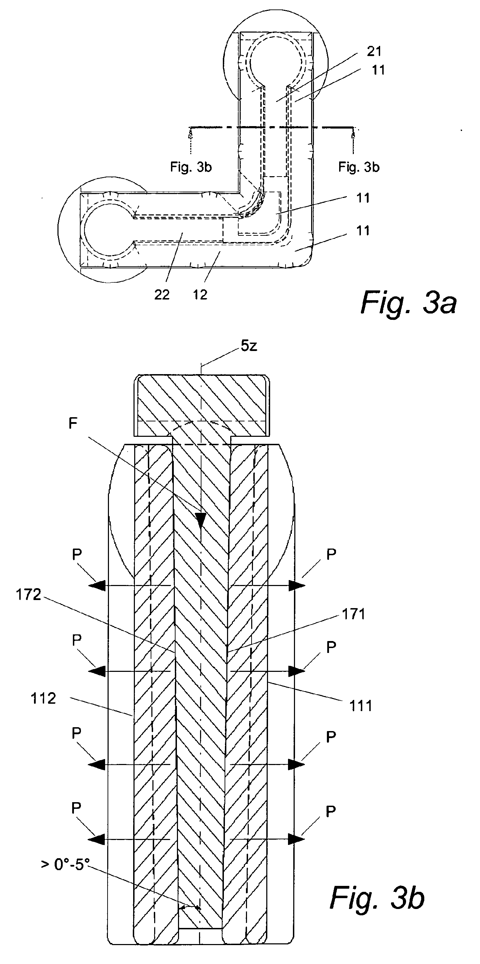

Fig. 3a zeigt die Verbindungseinheit samt Schnittführung für Fig. 3b in der Sicht von Oben. Es sind die zwei Teile 1 und 2 sowie deren Schenkel 11, 12 und 21, 22 zu erkennen.

Fig. 3b zeigt den in Fig. 3a eingezeichneten Vertikalschnitt der Verbindungseinheit. Hierbei ist das äußere Teil 1 und das innere Teil 2 zu erkennen. Die umgebenden zu verbindenden Bauteile sind nicht dargestellt. Die Darstellung verdeutlicht, wie mit der Einschubkraft F in Richtung 5z an den Pressflächen 171 und 172 über die Winkelstellung der Pressflächen zur Einschubrichtung 5z Presskräfte P erzeugt werden, die annähernd rechtwinkelig zur Einschubrichtung 5z über die vertikalen Außenflächen 111 und 112 des Teils 1 auf die umliegenden zu verbindenden, nicht dargestellten, Bauteile übertragen werden. Es ist weiterhin ersichtlich, dass der Winkel zwischen den Pressflächen 172 bzw. 172 und der Einschubrichtung 5z zwischen 0° und 5° liegt.

## Patentansprüche

1. Verbindungssystem mit wenigstens zwei miteinander zu verbindenden Bauteilen (3, 4, 5, 6) und einer Verbindungseinheit, wobei
- die Bauteile Fügeflächen (3a, 3b) aufweisen, an denen die Bauteile miteinander verbunden werden sollen und im Bereich der Fügeflächen Ausnehmungen (31, 41, 51) zur Aufnahme der Verbindungseinheit eingebracht sind,
- die Verbindungseinheit einen äußeren Teil (1) und einem in diesen einschiebbaren inneren Teil (2) aufweist und die beiden Teile zweischenkelig ausgebildet sind,
- die Flächen (171, 172) der beiden Teile (1, 2), die beim Ineinanderschieben aufeinandertreffen, zur Schubrichtung (5z) in einem selbst hemmenden Winkel stehen, wodurch beim Ineinanderschieben der Teile (1, 2) rechtwinkelig zur Schubrichtung Presskräfte (P) entstehen, die von den Außenflächen des äußeren Teils (1) auf Kontaktflächen der Ausnehmungen (31, 41, 51) übertragen werden und dadurch die wenigstens zwei Bauteile zusammenhalten,
- wobei die Ausnehmungen (31, 4) und die Fügeflächen (3a, 3b) der Bauteile (3, 41, 51) so ausgelegt sind, dass die Ausnehmungen jedes der zu verbindenden Bauteile genügend Kontaktfläche mit den Außenflächen des äußeren Teils (1) aufweisen, um über die dort übertragenen Presskräfte eine reibschlüssige Verbindung der Bauteile zu gewährleisten,
**dadurch gekennzeichnet, dass** die beiden Teile (1, 2) der Verbindungseinheit und die beiden Bauteile (3/4, 5; 5, 6) zusammen in ein und derselben Schubrichtung (5z) ineinander geschoben werden, die rechtwinkelig zu der durch die Schenkel (11, 21, 12, 22) aufgespannten Ebene (3y, 4x) liegt, so dass die beiden Teile (1, 2) nach dem Zusammenbau der Bauteile (3/4, 5; 5, 6) von außen unsichtbar sind.

2. Verbindungssystem nach Anspruch 1, **dadurch gekennzeichnet, dass** die Teile (1,2) der Verbindungseinheit hinsichtlich ihrer Steifigkeit so abgestimmt sind, das sie ihre Verbindung zueinander über die selbsthemmenden Presskräfte (P) halten und gleichzeitig diese Presskräfte (P), die rechtwinkelig zur Einschubrichtung (5z) wirken, auf die angrenzenden zu verbindenden Bauteile (3,4) übertragen.

3. Verbindungssystem nach Anspruch 1 **dadurch gekennzeichnet, dass** das nach dem Ineinanderschieben äußere Teil (1) in Blickrichtung der Ebene (3y, 4x) rechtwinkelig zur Schubrichtung (5z) auf mindestens zwei Schenkeln (11, 12) eine Profilierung (13, 14) aufweist, so dass es in diesen Schenkelrichtungen (3y, 4x) nicht von den umgebenden Bauteilen (3, 4) getrennt werden kann.

4. Verbindungssystem nach Anspruch 1, **dadurch gekennzeichnet, dass** die räumlichen Abmaße zumindest des nach dem Ineinanderschieben äußeren Teils (1) in Schubrichtung (5z) und Schenkelrichtung (3y,4x) gleich sind.

5. Verbindungssystem nach Anspruch 1 **dadurch gekennzeichnet, dass** mindestens die zwei Teile (1, 2) der Verbindungseinheit, die formähnlich ineinander geschoben werden, Raststellen (15, 25) aufweisen, die am Ende der Einschubbewegung ineinander greifen und eine formschlüssige Verhakung bilden, so dass mindestens diese zwei Teile (1, 2) nach dem Ineinanderschieben nicht mehr voneinander getrennt werden können, ohne die Verhakung aufzuheben.

6. Verbindungssystem nach Anspruch 1, **dadurch gekennzeichnet, dass** mindestens eines der Teile (1, 2) dieser Verbindungseinheit Verbindungsstellen (271,272) aufweist, an denen es mit dem Stand der Technik entsprechenden Verbindungsmitteln mit mindestens einem der zu verbindenden Bauteile (5) verbunden werden kann.

7. Verbindungssystem nach Anspruch 5, **dadurch gekennzeichnet, dass** die Raststelle am nach dem Ineinanderschieben inneren Teil (2) durch eine Blattfeder (24) gebildet wird, deren Ende rechtwinkelig zur Einschubrichtung (5z) beweglich ist und auf dem sich eine Rastnase (25) mit einer Sperrfläche (251) befindet, die gegenüber der Einschubrichtung (5z) annähernd rechtwinkelig steht und dass die Raststelle am nach dem Ineinanderschieben äußeren Teil (1) durch einen Durchbruch (15) gebildet wird, der ebenfalls eine Sperrfläche (151) aufweist, die zur Einschubrichtung (5z) annähernd rechtwinkelig ist, wobei die beiden genannten Sperrflächen (251,151) im eingerasteten Zustand aufeinander stehen und eine Verschiebung der beiden Teile (1,2) der Verbindungseinheit verhindern.

8. Verbindungssystem nach Anspruch 7, **dadurch gekennzeichnet, dass** der äußere Teil (1) der Verbindungseinheit einen Durchgang (15) aufweist, durch den hindurch die Blattfeder von außerhalb der Verbindungseinheit mit einem stiftartigen Werkzeug erreicht und außer Eingriff gedrückt werden kann

## Claims

1. A connection system having at least two components (3, 4, 5, 6)of a connection unit that are to be connected to each other, and a connection unit, wherein:
- the components have joint surfaces (3a, 3b) at which the components are to be connected to each other and recesses (31, 41, 51) for receiving the connection unit are made in the region of the joint surfaces,
- the connection unit has an outer part (1) and an inner part (2) that can be inserted therein, and the two parts are designed with two legs,
- the surfaces (171, 172) of the two parts (1, 2) contacting each other during insertion into each other are at a self-locking angle to the sliding direction (5z), whereby press forces (P) perpendicular to the insertion direction arise when inserting the parts (1, 2) into each other, said forces being transmitted from the outer surfaces of the outer part (1) to contact surfaces of the recesses (31, 41, 51) and thereby holding the at least two components together,
- the recesses (31, 4) and the joint surfaces (3a, 3b) of the components (3, 41, 51) are designed so that the recesses of each of the components to be connected comprise sufficient contact surface to the outer surfaces of the outer part (1), to ensure a non-positive connection of the components by means of the press forces transmitted there,
**characterized in that** the two parts (1, 2) of the connection unit and the two components (3/4, 5; 5, 6) are inserted into each other in the same sliding direction (5z) that is located at right angles to the plane (3y, 4x) that is spanned by the legs (11, 21, 12, 22), so that the two parts (1, 2) are not visible from the outside after the components (3/4, 5; 5, 6) have been assembled.

2. The connection system according to Claim 1, **characterized in that** the parts (1, 2) of the connection unit are matched in terms of their stiffness so that they maintain their connection relative to each other by means of the self-locking press forces (P) and at the same time transmit these press forces (P) that act perpendicular to the sliding direction (5z), to the adjacent components (3, 4) to be connected.

3. The connection system according to Claim 1, **characterized in that** that part (1) which is outside after the insertion, exhibits in the viewing direction of the plane (3y, 4x) perpendicular to the sliding direction (5z) on at least two legs (11, 12) a profile (13, 14) so that in these leg directions (3y, 4x) it cannot be separated from the surrounding components (3, 4).

4. The connection system according to Claim 1, **characterized in that** the spatial dimensions, at least of that part (1) that is outside after insertion, are identical in the sliding direction (5z) and the leg direction (3y, 4x).

5. The connection system according to Claim 1, **characterized in that** at least the two parts (1, 2) of the connection unit that are inserted into each other in a shape-similar manner, have detent points (15, 25) that engage into each other at the end of the sliding-in movement and form a positive entanglement so that at least these two parts (1, 2) can no longer be separated from each other after insertion without releasing the entanglement.

6. The connection system according to Claim 1, **characterized in that** at least one of the parts (1, 2) of this connection unit exhibit connection points (271, 272) where it can be connected by way of connection means according to the prior art to at least one of the components (5) to be connected.

7. The connection system according to Claim 5, **characterized in that** the detent point at that part (2) that is outside after insertion, is formed by a leaf spring (24) whose end can be moved perpendicular to the sliding-in direction (5z) and on which there is a detent nose (25) having a locking surface (251) that is located approximately perpendicular relative to the sliding-in direction and that the detent point at that part (1) that is outside after insertion, is formed by a through hole (15) that likewise exhibits a locking surface (151) that is approximately perpendicular to the sliding-in direction, wherein both locking surfaces (251, 151) mentioned stand on each other in the locked state and prevent the two parts (1, 2) of the connection unit from shifting.

8. The connection system according to Claim 7, **characterized in that** the outer part (1) of the connection unit exhibits a passage (15) through which the leaf spring can be reached by a pin-like tool from outside the connection unit and pressed out of engagement.

## Revendications

1. Système de liaison comprenant au moins deux éléments (3, 4, 5, 6) à relier entre eux et une unité de liaison, où :
- les éléments sont pourvus de faces de joint (3a, 3b) par lesquelles les éléments doivent être reliés ensemble et dans lesquelles sont agencés des logements (31, 41, 51) pour recevoir l'unité de liaison,
- l'unité de liaison comprend une partie extérieure (1) et une partie intérieure (2) pouvant s'y insérer, les deux parties ayant une forme présentant deux branches,
- les faces (171, 172) des deux parties (1, 2) entrant en contact lors de l'insertion sont disposées suivant un angle autobloquant en direction de l'insertion (5z), générant ainsi des forces de pression (P) perpendiculaires à la direction d'insertion qui sont transmises par les faces extérieures de la partie extérieure (1) sur les faces de contact des logements (31, 41, 51) de façon à assurer ainsi la liaison des éléments qui sont au moins au nombre de deux,
- les logements (31, 4) et les faces de joint (3a, 3b) des éléments (3, 41, 51) étant dimensionnés de façon que les logements de chacun des éléments à relier possèdent une assez grande surface de contact avec les faces extérieures de la partie extérieure (1) pour assurer, grâce aux forces de pression transmises à cet endroit, la liaison par friction des éléments,
- **caractérisé en ce que** les deux parties (1, 2) de l'unité de liaison et les deux éléments (3/4, 5; 5, 6) sont insérés ensemble dans une même direction d'insertion (5z), perpendiculaire au plan (3y, 4x) formé par les deux branches (11, 21, 12, 22), de façon que les deux éléments (1, 2) ne soient plus visibles de l'extérieur après l'assemblage des éléments (3/4, 5; 5, 6).

2. Système de liaison selon la revendication 1, **caractérisé en ce que** la rigidité des parties (1, 2) de l'unité de liaison est choisie de façon à ce que leur liaison soit assurée grâce à la force de pression (P) autobloquante et qu'elles transmettent en même temps la force de pression (P) autobloquante, perpendiculaire à la direction d'insertion (5z), aux éléments (3, 4) à relier.

3. Système de liaison selon la revendication 1, **caractérisé en ce que** la partie (1) extérieure, après l'insertion, présente sur au moins deux branches (11, 12), dans le sens de vue du plan (3y, 4x) perpendiculaire à la direction d'insertion (5z), un profil (13, 14), de façon à ne pas être dissociable, dans la direction de ces branches (3y, 4x) des éléments (3, 4) juxtaposés.

4. Système de liaison selon la revendication 1, **caractérisé en ce que** les dimensions géométriques au moins de la partie (1) extérieure, sont identiques, après l'insertion, dans la direction de la poussée (5z) et dans la direction de branche (3y, 4x).

5. Système de liaison selon la revendication 1, **caractérisé en ce que** les deux parties (1, 2) au moins de l'unité de liaison ayant une forme similaire et étant insérées l'une dans l'autre possèdent des points d'enclenchement (15, 25) qui s'engagent l'un dans l'autre à la fin du mouvement d'insertion et forment un verrouillage par complémentarité de forme de façon à ce que ces deux parties (1, 2), après avoir été insérées l'une dans l'autre, ne puissent plus être séparées l'une de l'autre sans ouvrir le verrouillage.

6. Système de liaison selon la revendication 1, **caractérisé en ce qu'**au moins une des parties (1, 2) de cette unité de liaison présente des points de fixation (271, 272) pour y être fixée sur au moins un des éléments (5) à relier à l'aide de moyens de fixation conformes à l'état de la technique.

7. Système de liaison selon la revendication 5, **caractérisé en ce que** le point d'enclenchement de la partie intérieure (2), après l'insertion, est réalisé par une lame ressort (24) dont l'extrémité est mobile dans le sens perpendiculaire à la direction d'insertion (5z) et sur laquelle est situé un talon de verrouillage (25) comprenant une face de verrouillage (251) disposée à peu près perpendiculairement au sens d'insertion (5z) et que le point de verrouillage de la partie (1) extérieure, après l'insertion, est formé par une échancrure (15) qui présente également une face de verrouillage (151) à peu près perpendiculaire à la direction d'insertion (5z), lesdites deux faces de verrouillage (251, 151), après l'insertion, étant en face l'une de l'autre, empêchant tout mouvement des deux parties (1, 2) de l'unité de liaison.

8. Système de liaison selon la revendication 7, **caractérisé en ce que** la partie extérieure (1) de l'unité de liaison possède une échancrure (15) pouvant être traversée par un outil de type tige pour atteindre et pousser la lame ressort de l'extérieur de l'unité de liaison afin de la dégager de son enclenchement.
